# EUROPEAN PATENT SPECIFICATION

(11) **EP 2 057 895 B1**
(45) Date of publication and mention of the grant of the patent: **25.03.2015**
(21) Application number: 07425700.7
(22) Date of filing: 07.11.2007
(51) Int. Cl.: A01J 5/04, A01J 5/08

(54) **Automatic valve for milking installations**
Automatisches Ventil für Melkanlagen
Soupape automatique pour des installations de traite

(43) Date of publication of application: 13.05.2009
(73) Proprietor: INTERPULS S.P.A., 42020 Albinea RE (IT)
(72) Inventor: Nicolini, Gabriele, 42042 Fabbrico (RE) (IT); Sicuri, Roberto, 43100 Parma (IT)
(74) Representative: Robba, Pierpaolo

(56) References cited:
- EP-A- 0 903 078
- EP-A- 1 021 948
- EP-A- 1 795 068
- FR-A- 2 792 166
- FR-A- 2 814 334

## Description

The present invention relates to an automatic valve for milking plants.

More precisely, the invention relates to an automatic valve for manifolds of milking plants.

Milking plants for cattle, sheep, goats and other animals are known, which comprise one or more milking units.

A milking unit essentially comprises a pneumatic vacuum pump, a milking assembly (or teat cup holding assembly), a pulsator, a manifold-distributor, a milk collecting container and ducts that suitably connect the above parts and form the vacuum and milk circuits.

Each milking assembly comprises milking barrels to be applied to the animal's teats.

Two or four milking barrels will be provided, depending on whether the machine is intended for sheep and goats or for cattle, respectively.

Each barrel is formed by a cylindrical case, or teat cup holder, generally made of metal or rigid resin and containing a rubber sheath or teat cup which easily adapts to the teat.

The lower end of the teat cup is permanently connected with the vacuum reservoir through the collection bucket or the milk transport duct.

The perfectly sealed hollow space between the teat cup holder and the teat cup is connected with the pulsator, which puts it alternately in communication with the vacuum reservoir and the atmosphere.

Since the interior of the teat cup is always under vacuum, in the period when vacuum is created also in the aforementioned hollow space, the teat remains free and milk is sucked through the manifold into the bucket or the transport duct. On the contrary, in the period when the hollow space is brought in communication with the atmosphere, the teat is subjected to a slight compression that, in practice, provides for a massaging action.

The pulsator controls the phases of milk sucking from the udder and teat massaging according to a predetermined frequency, generally in the range 50 to 60 pulsations/min for cattle and 120 to 150 pulsations/min for sheep, and according to a predetermined pulsation ratio, i.e. a ratio between the time devoted to sucking and relaxing phases, respectively.

The manifold - distributor has the task of receiving and combining milk coming from the milking barrels and of directing it to the collection container or the transport duct, while distributing and keeping the same vacuum level and the same pulsation frequency in all the aforesaid barrels.

During transfer of a milking assembly from an animal to another, or due to the accidental detachment of some barrels or the whole milking assembly from the udder, atmospheric air can enter with violence through the teat cup, since the plant is constantly under vacuum.

Inflow of atmospheric air at high velocity due to the high vacuum generally entails:
- a strong vacuum consumption, with a consequent unavoidable lowering of the vacuum level in the plant, which can compromise the conditions of the ongoing milking for the other animals, and creation of turbulent motions in milk contained in milk ducts;
- a fluctuation of the vacuum level in the plant, which fluctuation, when propagating to the operating milking assemblies, causes troubles to the animals;
- entry of dirt and particularly of bacteria present in atmospheric air, resulting in milk contamination and lowering of the milk quality, and hence in the decrease of the milk economic value;
- creation of a great quantity of foam in milk, due to the biphasic fluid generated in the ducts, resulting in a loss of discharge velocity.

In order to avoid the above drawbacks, the manifold-distributor usually comprises a closure valve intended to cut off communication between the manifold and the teat cup, thereby preventing inflow of atmospheric air when the barrel is detached from the udder. Those closure valves can be manually or automatically operated.

Manually operated valves have an inherent drawback in that they are to be actuated by the operator. Actually, should the operator forget closing the valve or be late in closing the valve, the serious drawbacks mentioned above unavoidably occur. Clearly, moreover, manually operated valves cannot prevent air inflow in case the barrel becomes accidentally detached.

Automatic valves, which close without need of an operator's intervention, have already been developed in the past.

IT U 207706 discloses an automatic valve having a body in which a chamber is formed having defined therein a first port communicating with the duct supplying the milk coming from the teat cup, and a second port, located in the upper portion of the chamber and communicating with the manifold. A plate-shaped shutter, e.g. made of stainless steel, is located inside the chamber, and more precisely in a seat provided at the bottom of the chamber, and it closes the second port by suction. The plate weight is such that the plate keeps said second port open during normal milk passage, and makes the second port close when the barrel is removed from the teat and the plate is sucked upwards due to the vacuum action.

The arrangement described above has some drawbacks.

Actually, the automatic valve made in this manner is prone to incorrect operation when the valve axis is inclined instead of being vertical relative to the ground. Actually, in such case, it may happen that the plate closes the valve even during normal milk passage, resulting in the barrel becoming detached and falling down from the udder.

Another drawback is the difficulty of accurately cleaning the valve interior. The strong turbulence occurring during valve washing actually can make the second port close due to the plate lifting.

In order to obviate the latter drawback, valves have been proposed which incorporate a manually operated retaining member, keeping the valve open during cleaning. For that reason, those valves are referred to as semi-automatic valves.

It is however clear that such a solution has the drawback of making operator's intervention necessary at least during the cleaning phase, besides entailing the risk that the retaining member is not released at the end of the cleaning in order to restore the operating conditions of the valve.

In order to overcome the above drawbacks, an improved automatic valve, disclosed in IT-U-246604, and FR-U-2814334 was developed.

That automatic valve includes a resilient member, e.g. a coil spring, arranged between the plate and the second port. The resilient member prevents the shutter from closing said second port during both milk passage and valve washing, but not when the corresponding barrel is detached from the teat.

A drawback of the above valves is related with shutter instability, especially in case of high flow rates of milk. Due to such instability, the plate can be lifted towards the second port thereby reducing or even completely stopping the flow rate of the milk flow leaving the valve.

Plate instability mainly occurs in that the milk flow entering the chamber impinges off axis on the plate and applies to the plate a momentum inclining the plate relative to its axis, thereby favouring its lifting.

To solve the above problem, IT-U-250450 teaches configuring the chamber inside the valve so that the milk flow entering the chamber is uniformly distributed over the plate circumference, so that milk impact on the plate does not make the plate incline. According to the proposed solution, deflector means are provided to this end around the milk discharge port in order to deflect the milk flow entering the chamber and uniformly distribute it over the top surface of the plate.

Another example of a valve for milking plants is disclosed in EP 1795068 which refers to a valve mounted in a shell of a teat cup assembly. The valve is movable from an open to a closed position during the milking cycle and comprises a shaped impact surface.

All said valves however have the drawback of making the milk flow passing through them turbulent because of their internal shape.

That phenomenon has a number of consequences:
- the discharge velocity, and hence the throughput of milk passing through the valve, is penalised: actually, it is known that the velocity of a fluid is the highest, and hence the most effective in the concerned case, the closest the motion conditions to laminar motion:

- the milk quality, and hence, the milk economic value resulting from the quality and yield of transformation of by-products, is reduced; actually, it is known that milk is an emulsion of fatty substances in globular form, and that integrity of fat globules can be affected by the rough collisions the fluid would undergo in case of turbulent motion;
- the amount of foam formed in milk is increased, thereby negatively affecting the fluid transfer velocity.

Thus, it is a first object of the present invention to provide an automatic valve for a manifold of a milking plant that, taking into account the fluido-dynamic characteristics of the milk passage through the same valve, allows obtaining a flow as laminar as possible.

The valve of the invention is primarily, but not exclusively, intended for use in milking plants for sheep and goats.

It is known that anatomic differences exist between cattle and sheep or goats, especially as far as the milk cistern is concerned. In dairy cows, the milk cistern has such a volume that it can contain only about 20% of all milk produced, the remaining 80% of which remains in the alveoli until the milking moment (in such case, the term "alveolar milk" is used). On the contrary, in goats, the cistern contains about 75% of the milk produced, and in sheep the percentage ranges from about 50% for breeds intended for milk production to about 30% for breeds intended for flesh production (in such case, the term "cisternal milk" is used).

Due to the anatomical differences mentioned above, the milking speed used in case of sheep and goats is generally much higher that that used for cattle.

Moreover, sheep and goats have milk availability lower than that of cattle, and two teats only: hence the milking frequency, and consequently, the number of times the milking assembly is applied to and detached from the udder, is considerably higher.

A further reason suggesting use of the above valves, especially for sheep and goats, is that milking plants for such animals are generally equipped with a high number of milking assemblies, and the vacuum level inside the plant often is not very high, even in normal operating conditions. A further reduction in vacuum level caused by inflow of atmospheric air through the barrels would have therefore greater consequences on the overall vacuum level in the plant.

In case of sheep and goats the valve weight is of considerable importance.

Actually, as known, there is a tendency to reduce more and more the vacuum level in milking plants used for such animals in order to protect their physical integrity, which unavoidably translates into a better quality of the milk produced. Reducing the vacuum level in the plant entails the need of reducing the weight of the parts of the milking assembly, in order to prevent the barrels from becoming detached from the teats, the barrels being just sustained, as known, by the sucking effect caused by vacuum.

Weight reduction also meets a further requirement existing especially when milking sheep.

Actually sheep have a morphology by which teats are oriented obliquely outwards. Too heavy a milking assembly weighing on the animal's udder would tend to vertically orient the teats, causing narrowing or, what is worse, obstruction of the internal teat duct through which milk flows.

An unavoidable consequence of that phenomenon would be a lengthening of milking time, with the risk of staunching of milk within the udder.

Thus, it is a second object of the present invention to provide a lightweight automatic valve for a manifold of a milking plant.

Known automatic valves have the feature of remaining open when the plant is turned off.

Therefore, when turning the plant on, the condition can occur in which the overall amount of atmospheric air passing through the valves exceeds the evacuation capacity of the vacuum pump. The biggest the plant, i.e. the highest the number of automatic valves provided, the most likely the occurrence of that phenomenon. Under such conditions, the plant cannot reach the desired vacuum level, and the vacuum pump is therefore to be upgraded, with higher buying and operating costs. In the alternative, partition gates are to be installed in the plant in order to divide it by cutting part of the milking assemblies off, which assemblies will be connected only after the vacuum level has been reached. This solution is expensive and not very practical, since it entails manual operations.

Thus, it is another object of the invention to obviate the above drawback of the known valves by providing a valve that is closed when the plant is off.

It is yet a further object of the present invention to provide an automatic valve of the kind described above, which can be easily and cheaply manufactured.

The above and other objects are achieved by the valve as claimed in the appended claims.

Advantageously, thanks to the shape given to the milk path inside the valve according to the invention, generation of foam by air, which is always present in the system, even though in small amounts, is substantially avoided.

The choice of low density plastics materials and elimination of metal parts, which on the contrary are present in existing products, allow attaining a lightweight valve.

Advantageously, the limited weight of the valve reduces the risk that the milking assembly falls down when a low vacuum level is used, and contributes to preventing the milk extraction duct from being narrowed or obstructed when milking sheep.

The fluido-dynamic characteristics imparted by the geometry of the valve components lead to attaining the maximum structural integrity of the milk being milked, and the maximum effectiveness in terms of valve washing, the latter feature being particularly advantageous when the plant is used in environments where water is scarce.

Advantageously, moreover, the valve is completely automatic in any operation phase.

Advantageously, thanks to the stainless steel spring, the valve according to the invention is normally closed. That feature prevents atmospheric air inflow during the starting phase of the plant, contrary to what happens in conventional plants where valves are normally open when the plant is off.

The above feature of the valve according to the invention makes the step of initial vacuum creation extremely easy even in large plants, without operating with particular arrangements on the plants themselves.

Advantageously, the valve according to the invention can be easily disassembled and all parts thereof can be readily accessed and replaced, with a consequent reduction of maintenance and repair costs.

A detailed description of an exemplary embodiment of the invention will be provided hereinafter with reference to the accompanying drawings, in which:
- Fig. 1 is a longitudinal sectional view of the valve according to the invention;
- Fig. 2 is a longitudinal sectional view of the valve shown in Fig. 1, in closed configuration;
- Fig. 3 is a longitudinal sectional view of the valve shown in Fig. 1, in open configuration;
- Fig. 4 is a side view of the shutter;
- Fig. 5 is a top plan view of the shutter;
- Fig. 6 is a bottom plan view of the shutter;
- Fig. 7 is top perspective view of the shutter;
- Fig. 8 is bottom perspective view of the shutter;
- Fig. 9 is a side view of the bottom portion;
- Fig. 10 is a top perspective view of the bottom portion.

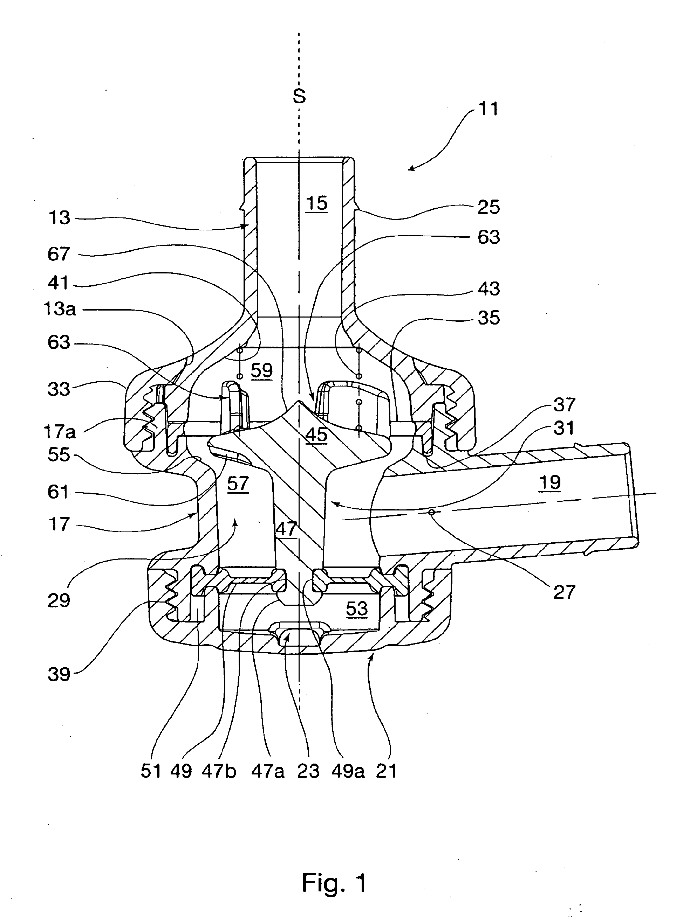

Referring to Fig. 1, the automatic valve according to the invention comprises a substantially cylindrical hollow body 11, in which there are defined a top portion 13, having an axial duct 15 for milk inflow, an intermediate portion 17 having a radial duct 19 for milk outflow, and a bottom portion 21 having at least one port 23 communicating with the outside environment. Said axial duct 15 for milk inflow preferably has at least one radial projection 25 arranged to engage the wall of a corresponding sheath or teat cup (not shown) of the milking assembly the valve is associated with. Said radial outlet duct 19 preferably has a small hole 27, generally with a diameter of the order of 1 mm, e.g. a diameter of about 0.7 mm, for the controlled admission of atmospheric air, allowing milk to be discharged through said outlet duct.

According to the invention, said portions 13, 17, 21 are preferably made of a plastic material suitable for contact with foodstuff, and, moreover, top and intermediate portions 13 and 17 are preferably transparent.

A chamber 29 for milk passage is defined inside hollow body 11 and houses an axially displaceable shutter 31. Shutter 31 is preferably made of a low density plastic material suitable for contact with foodstuff.

As it will be better explained below, said shutter 31 is axially displaceable and it can take a closure configuration, in which milk passage through chamber 29 is prevented, and an opening configuration, in which milk passage through chamber 29 is enabled.

Said three portions 13, 17 and 21 are preferably separable and are joined together through threaded ring nuts or threaded couplings or similar joining means.

In the illustrated embodiment, top portion 13 is joined with intermediate portion 17 by means of a connecting ring nut 33 cooperating on the one side with bottom edge 13a of top portion 13, and screwed on the other side around top edge 17a of intermediate portion 17.

Said ring nut 33 does not come into contact with milk passing through the valve, and hence it can be made of a material that is not necessarily suitable for contact with foodstuff, e.g. plastics.

A sealing gasket 35, which is preferably made of thermoplastic material suitable for contact with foodstuff and is intended to avoid milk leakage in the contact region between top and intermediate portions 13 and 17, is preferably interposed between said top and intermediate portions 13 and 17 and is received in an annular seat 37 formed to this purpose in intermediate portion 17.

Still with reference to the illustrated example, bottom portion 21 is joined with intermediate portion 17 through a direct threaded coupling 39.

A resilient member 43, preferably consisting of a coil spring arranged with its axis preferably coaxial to axis "S" of the valve, is preferably interposed between top 41 of chamber 29 and shutter 31.

As it will be better described below, spring 43 is to keep shutter 31 closed when the milking plant is off, that is when the valve is not subjected to the sucking action of the vacuum system in the milking plant.

Shutter 31 provided inside chamber 29 preferably is substantially "mushroom" shaped, with a head 45 and a stem 47 defined therein.

According to the invention, shutter 31 is associated with valve body 11 by means of a guide 49 that, in the illustrated embodiment, consists of a flexible element.

According to the invention, shutter 31 is so received inside chamber 29 that head 45 is substantially positioned in the upper portion of said chamber 29, substantially corresponding, in the illustrated example, to the region of transition between top and intermediate portions 13 and 17. Stem 47 of shutter 31 axially extends along chamber 29 and ends in correspondence of guide 49 consisting of a flexible, substantially flat membrane, the periphery of which is held between intermediate and bottom portions 17 and 21 in an annular seat 51 defined there.

Membrane 49 acts as a guide for the displacement of shutter 31 and, moreover, defines a separate bottom space 53 for said chamber 29, preventing milk from entering such a space.

Shutter 31 is associated with membrane 49 through the engagement of bottom end 47a of stem 47 in a central hole 49a provided in membrane 49. To this end, bottom end 47a of stem 47 has a circumferential groove 47b accommodating the edge of hole 49a of flexible membrane 49.

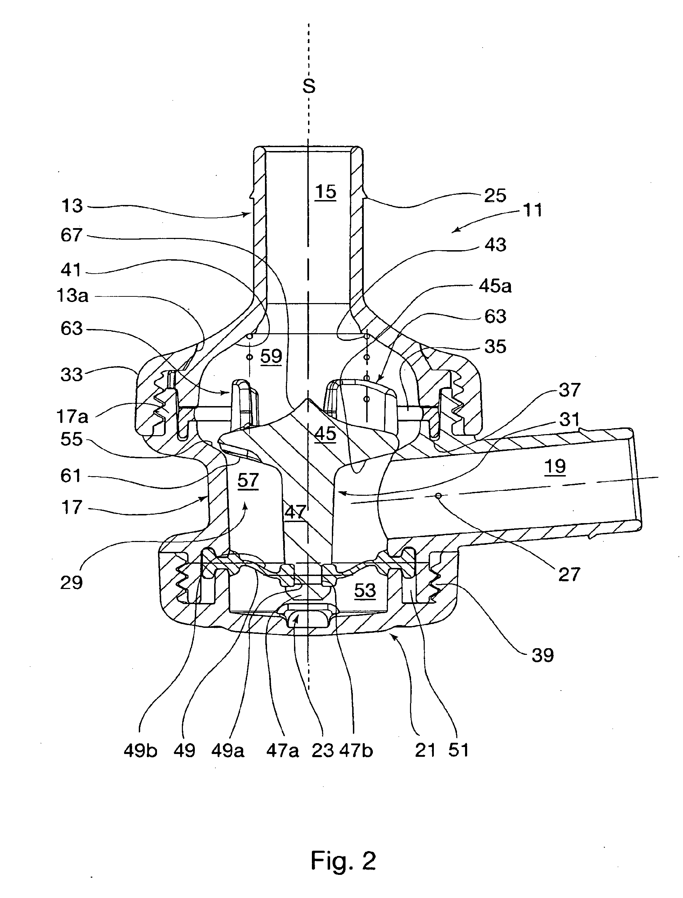

Turning to Fig. 2, there is shown the configuration taken by the valve according to the invention when the milking plant is off and spring 43 described above is provided.

Due to the elastic resistance of spring 43, shutter 31 is in its closure position with head 45 abutting against a circumferential shoulder 55 of intermediate portion 17, and membrane 49 is bent towards bottom portion 21.

Spring 43 proves particularly advantageous for an easy vacuum creation in the milking plant when the latter is started. Actually spring 43, by keeping the valve closed, prevents air from entering through the valve during vacuum creation in the plant. Consequently, the amount of air the plant is to evacuate for attaining the operating vacuum level required for milking is considerably reduced.

Advantageously therefore milking plants equipped with a great number of valves can be started by using a vacuum pump with smaller capacity and by avoiding plant division by means of partition gates.

The same configuration as shown in Fig. 2 is taken by the valve according to the invention, independently of whether or not spring 43 is provided, even when the plant is started but the corresponding barrel has not yet been applied onto the teat of the animal to be milked.

That condition is possible in that air at atmospheric pressure is present both in milk inlet duct 15 and in the region below membrane 49, corresponding to space 53 communicating with the external environment through port 23, and in that the area of bottom face 45a of head 45 of shutter 31, facing membrane 49, is greater than the area of corresponding face 49b of membrane 49 facing shutter 31.

Actually, vacuum is created in duct 19 by the vacuum system of the milking plant, and the same vacuum condition is generated in intermediate space 57, defined between head 45 of shutter 31 and membrane 49.

When the barrel associated with the valve is applied on the teat of an animal to be milked, top space 59 formed above head 45 of shutter 31 is closed. Such a space 59 initially is at atmospheric pressure and is quickly brought to vacuum conditions thanks to the provision of a leak channel 61 formed between head 45 of shutter 31 and circumferential shoulder 55 of intermediate portion 17. In the illustrated example, said leak channel 61 is formed in bottom face 45a of head 45 of shutter 31, yet it could even be formed in the wall of chamber 29, in correspondence with shoulder 55.

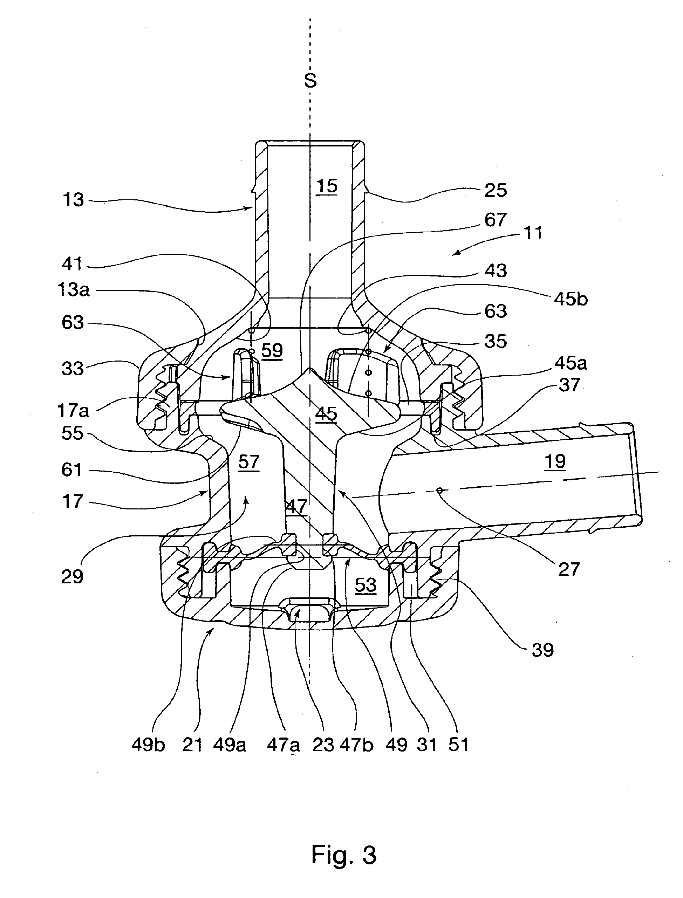

Turning now to Fig. 3, there is shown the configuration taken by the valve according to the invention when the milking plant is operating and the valve is associated with a barrel applied on the animal's teat.

When top space 59 has attained, thanks to leak channel 61, the same vacuum level as present in intermediate space 57, a force directed upwards against membrane 49 is generated because of the atmospheric pressure existing in bottom space 53 and thanks to the greater area of top face 45b of head 45 with respect to bottom face 45a, and said force causes the almost instantaneous valve opening thanks to the lifting of shutter 31.

From the moment the valve is opened, vacuum starts acting on the teat thereby causing extraction of milk present inside the udder until milking operation is completed.

When milking is over, when the barrel is removed from the teat, the operator causes a small inflow of atmospheric air into the sheath provided in the barrel, thereby slightly deforming its mouth in order the barrel can be removed from the teat. That small amount of air entering through the sheath directly impinges against head 45 of shutter 31, thereby generating an axial downward thrust and increasing pressure inside top space 59 of valve chamber 29, whereas a residual vacuum is still present in intermediate space 57.

Both factors contribute to the almost instantaneous valve closure, required to quickly disengage the milking assembly from the animal that has been milked, but they limit admission of atmospheric air into said assembly, so that the barrel is immediately ready for milking the subsequent animal.

Milk passing through the valve according to the invention starts its path in the top valve portion by passing first through top space 59, where it impinges against head 45 of shutter 31, which deviates laterally the milk trajectory. Then, milk reaches intermediate space 57 below the shutter head, whereafter it continues its path until impinging against membrane 49. Hence, the milk path is further laterally deflected until milk goes out through radial discharge duct 19 defined in intermediate body portion 17.

The above description clearly shows that such a path does not contribute to maintain a laminar motion in the milk flow. Actually, the wide deflections to which milk is subjected create whirls and cause collisions that slow the flow down and can damage the integrity of the fat globules.

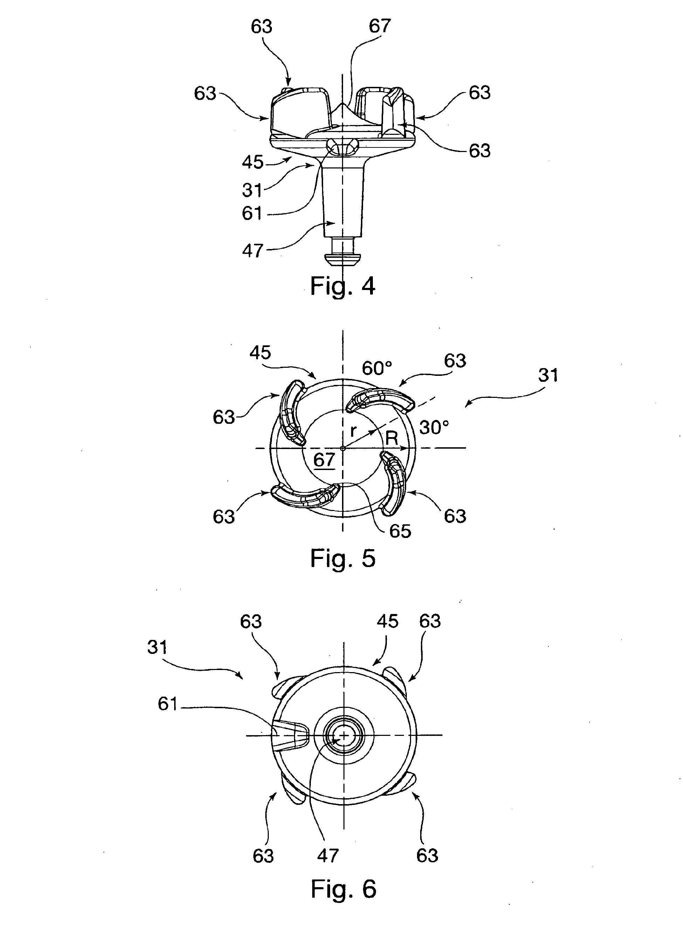

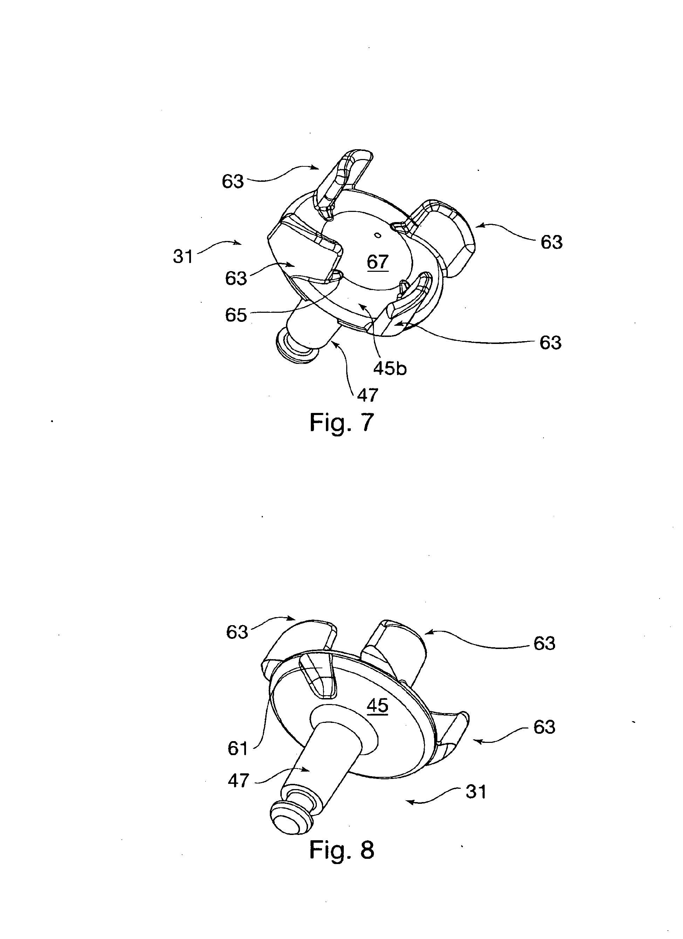

As it can be better appreciated from Figures 4 to 8, in order to reduce the above effect, according to the invention, top face 45b of head 45 of shutter 31, defining the corresponding impact surface for milk entering the valve, is advantageously shaped so as to guide the milk flow along a path reducing turbulence thereof. According to the invention, said face preferably will be substantially non-flat and it can be for instance conical and/or variously shaped.

More particularly, according to the invention, said top face 45b is equipped with deflectors 63 arranged so as to intercept the milk flow axially entering valve chamber 29.

Preferably, deflectors 63 project axially upwards from top face 45b of shutter 31 and are radially oriented.

More preferably, four deflectors 63 are provided, The deflectors are arc-shaped with inwards directed concavity and lie within an annulus which is internally defined by a circumference whose radius r is about half radius R of head 45 of shutter 31, and is externally defined approximately by the peripheral head edge, of radius R.

Still in accordance with the invention, radial deflectors 63 further are preferably shaped so that they internally define a circular seat 65 suitable for housing spring 43, when provided.

Deflectors 63 impart a rotary motion to the incoming milk, until generating a cyclone effect on the milk flow, which effect is maintained until milk reaches bottom membrane 49 and along discharge duct 19. The rotary behaviour imparted to the fluid flow by deflectors 63, in combination with the conical shape of shutter 31, gently deflects the milk flow and reduces collisions thereof, to the advantage of structural integrity of milk.

Advantageously, according to a preferred embodiment of the invention, the four deflectors 63 are uniformly distributed and extend each over a circular sector of about 60°, whereby a corresponding circular sector of about 30° is left free between a pair of adjacent deflectors. Moreover, deflectors 63 will have a curvature in the range 1/r to 1/R, where r and R are the minor and major radii, respectively, defining the annulus on head 45 of the shutter where deflectors 63 lie.

In this way, the deflection imparted to the milk flow is sufficient to impart a gentle rotary motion and the transit velocity is not reduced. However, in variant embodiments, the number, the size and the curvature of the deflectors can have different values.

Moreover, still in accordance with the invention, head 45 of shutter 31 preferably has a central portion 67, which is substantially externally defined by the annulus where deflectors 63 lie and which defines a corresponding circular projection axially extending from head 45 and having a substantially conical cross section with concave profile.

According to the invention, the described configuration of head 45 of shutter 31 is particularly advantageous also during the valve washing phase.

Indeed, should deflectors 63 be missing, the washing solution, generally comprising water and a detergent and fed through milk inlet duct 15, would not be able to wash with sufficient force certain internal regions of the valve, which therefore would only be wet but not thoroughly cleaned. More particularly, fat deposits could be formed in the region adjacent to membrane 49 and they would degrade, with time, the resilience characteristics of the material. Such deposits moreover cause formation of foci of bacterial charges that irremediably pollute transiting milk, thereby drastically lowering its quality and hence the economic value of milk.

Advantageously, the rotary behaviour imparted by deflectors 63 to the detergent solution fed into the valve through duct 15 makes this fluid flow exert a detergent mechanical action even in the points that are hardier to be reached and, above all, in uniform manner, thanks to the centrifugal force imparted thereto.

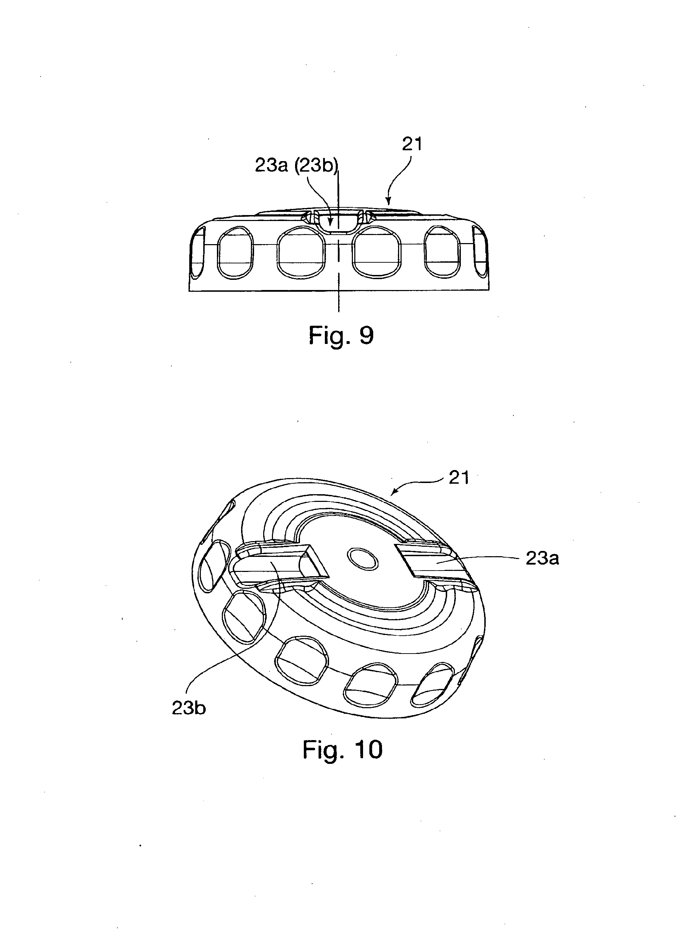

Turning to Figs. 9 and 10, bottom portion 21 of body 11 of the valve according to the invention is shown in greater detail.

Said portion has at least one air inlet port 23, putting bottom space 53 in communication with the outside environment, thereby enabling admission of air at atmospheric pressure.

In the illustrated example, said port 23 is made by a pair of diametrically opposite slots 23a, 23b formed in the body of bottom portion 21 and radially oriented in order to reduce the risk of dirt admission.

## Claims

1. An automatic valve for milking plants, comprising a substantially cylindrical hollow body (11) internally defining a chamber (29) for milk passage, which chamber has an axial inlet duct (15) and a radial outlet duct (19) and is provided with a shutter (31) which is axially displaceable between a closure configuration, in which milk passage through the chamber (29) is prevented, and an opening configuration, in which milk passage through the chamber (29) is enabled, said shutter (31) having a shaped impact surface (45b) arranged to guide the milk flow impinging on said shutter when entering the valve, **characterized in that** said impact surface (45b) is equipped with deflectors (63) axially projecting from top face of shutter (31) and radially oriented so as to impart a rotary motion to the milk entering the valve.

2. The valve as claimed in claim 1, wherein said shaped impact surface (45b) comprises four deflectors (63).

3. The valve as claimed in claim 1, wherein said deflector means (63) are arranged to impart a rotary motion to the milk entering the valve, until generating a cyclone effect on the milk flow.

4. The valve as claimed in claim 1 or 2 or 3, wherein said hollow body (11) comprises a top portion (13), in which said axial inlet duct (15) for milk is defined, an intermediate portion (17), in which said radial outlet duct (19) for milk is defined, and a bottom portion (21) having at least one port (23) communicating with the outside environment, said portions being separable and being joined together through threaded ring nuts or threaded couplings or similar joining means.

5. The valve as claimed in claim 4, wherein said top portion (13) is joined with the intermediate portion (17) by means of a connecting ring nut (33) cooperating on the one side with the bottom edge (13a) of the top portion (13) and screwed on the other side around the top edge (17a) of the intermediate portion (17).

6. The valve as claimed in claim 5, wherein a sealing gasket (35), intended to avoid milk leakage in the contact region between said top portion (13) and said intermediate portion (17), is provided between said top portion (13) and said intermediate portion (17).

7. The valve as claimed in claim 4, wherein the bottom portion (21) is joined with the intennediate portion (17) through a direct threaded coupling (39).

8. The valve as claimed in claim 1, wherein a resilient member (43), intended to keep the shutter (31) closed when the milking plant is off, is preferably interposed between the top (41) of said chamber (29) and the shutter (31).

9. The valve as claimed in claim 8, wherein said resilient member (43) consists of a coil spring arranged with its axis preferably coaxial to the axis (S) of the valve.

10. The valve as claimed in claim 1, wherein said shutter (31) provided inside the chamber (29) preferably is substantially "mushroom" shaped, with a head (45) and a stem (47) defined therein.

11. The valve as claimed in claim 10, wherein said shutter (31) is associated with the valve body (11) by means of a guide (49).

12. The valve as claimed in claim 11, wherein said guide consists of a flexible element.

13. The valve as claimed in claim 12, wherein said shutter (31)is so received inside the chamber (29) that its head (45) is substantially positioned in the upper portion of said chamber (29) and its stem (47) axially extends along the chamber (29) as far as to said guide (49), and wherein said guide consists of a substantially flat flexible membrane defining a separate bottom space (53) for said chamber (29).

14. The valve as claimed in claim 13, wherein a circumferential shoulder (55) is provided in said chamber (29) for abutment of said head (45) of said shutter (31) when the valve is closed.

15. The valve as claimed in claim 14, wherein the area of the bottom face (45a) of the head (45) of the shutter (31), facing the membrane (49), is greater than the area of the corresponding face (49b) of the membrane (49) facing the shutter (31).

16. The valve as claimed in claim 14, wherein a leak channel (61) is provided between the head (45) of the shutter (31) and the circumferential abutment shoulder (55).

17. The valve as claimed in claim 16, wherein said leak channel (61) is formed on the bottom face (45a) of the head (45) of the shutter (31).

18. The valve as claimed in claim 14, wherein the area of the top face (45b) of the head (45) is greater than the area of the bottom face (45a) of said head (45).

19. The valve as claimed in claim 10, wherein four deflectors (63) are provided, which are are-shaped and have inwards directed concavity.

20. The valve as claimed in claim 19, wherein said deflectors lie within an annulus which is internally defined by a circumference whose radius r is about half radius R of the head (45) of the shutter (31), and is externally defined approximately by the peripheral head edge of radius R.

21. The valve as claimed in claims 9, wherein said radial deflectors (63) further are preferably configured so that they internally define a circular seat (65) suitable for housing said spring (43), when provided.

22. The valve as claimed in claim 19, wherein said four deflectors (63) are uniformly distributed and extend over a circular sector of about 60°, whereby a corresponding circular sector of about 30° is left free between a pair of adjacent deflectors.

23. The valve as claimed in claim 20, wherein said deflectors (63) have a curvature ranging from 1/r to 1/R, where r and R are the minor and major radii, respectively, defining the annulus on the head (45) of the shutter (31) where the deflectors (63) lie.

24. The valve as claimed in claim 20, wherein the head (45) of the shutter (31) preferably has a central portion (67), which is substantially externally defined by the annulus where the deflectors (63) lie, and which defines a corresponding circular projection axially extending from the head (45) and has a substantially conical cross section with concave profile.

25. The valve as claimed in claim 3, wherein said bottom portion (21) includes a pair of diametrically opposite slots (23a, 23b), radially oriented in order to reduce the risk of dirt entry.

## Patentansprüche

1. Automatisches Ventil für Melkanlagen, mit einem im Wesentlichen zylindrischen hohlen Körper (11), der intern eine Kammer (29) für Milchdurchfluss definiert, wobei die Kammer einen axialen Einlasskanal (15) und einen radialen Auslasskanal (19) hat und mit einem Schließkörper (31) versehen ist, der in axialer Richtung zwischen einer Schließstellung, in der Milchfluss durch die Kammer (29) hindurch verhindert wird, und einer Offenstellung, in welcher Milchfluss durch die Kammer (29) hindurch ermöglicht ist, beweglich ist, wobei der Schließkörper (39) eine geformte Prallfläche (45b) hat, die dafür angeordnet ist, um den Milchfluss, der beim Eintritt in das Ventil auf den Schließkörper trifft, zu führen, **dadurch gekennzeichnet, dass** die Aufprallfläche (45b) mit Ablenkelementen (63), die axial von der Oberseite des Schließkörpers (31) vorstehen und radial ausgerichtet sind, sodass diese eine Drehbewegung der in das Ventil eintretenden Milch bewirken.

2. Ventil nach Anspruch 1, wobei die geformte Prallfläche (45b) vier der Ablenkelemente (63) aufweist.

3. Ventil nach Anspruch 1, wobei die Ablenkelemente (63) so angeordnet sind, dass sie eine Drehbewegung der in das Ventil eintretenden Milch bewirken, bis im Milchfluss ein Wirbel erzeugt ist.

4. Ventil nach Anspruch 1, 2 oder 3, wobei der hohle Körper (11) einen oberen Abschnitt (13), in dem der axiale Einlasskanal (15) für Milch ausgebildet ist, einen Zwischenabschnitt (17), in dem der radiale Auslasskanal (19) für Milch ausgebildet ist, und einen unteren Abschnitt (21) aufweist, der wenigstens einen Anschluss (23) hat, der mit der Umgebung in Verbindung steht, wobei die Abschnitte trennbar sind und miteinander durch Gewindemuttern, Schraubverbindern oder ähnlichen Verbindungsmitteln verbunden sind.

5. Ventil nach Anspruch 4, wobei der obere Abschnitt (13) mit dem Zwischenabschnitt (17) durch eine verbindende Mutter (33) verbunden ist, die auf einer Seite mit der unteren Kante (13a) des oberen Abschnitts (13) zusammenwirkt und auf der anderen Seite um die obere Kante (17a) des Zwischenabschnitts (17) geschraubt ist.

6. Ventil nach Anspruch 5, wobei ein Dichtring (35), der Milchaustritt in dem Kontaktbereich zwischen dem oberen Abschnitt (13) und dem Zwischenabschnitt (17) verhindern soll, zwischen dem oberen Abschnitt (13) und dem Zwischenabschnitt (17) angeordnet ist.

7. Ventil nach Anspruch 4, wobei der untere Abschnitt (21) mit dem Zwischenabschnitt (17) durch eine direkte Schraubverbindung (39) verbunden ist.

8. Ventil nach Anspruch 1, wobei ein Federglied (43), das den Schließkörper (31) bei ausgeschalteter Melkanlage geschlossen halten soll, bevorzugt zwischen dem Oberteil (41) der Kammer (29) und dem Schließkörper (31) angeordnet ist.

9. Ventil nach Anspruch 8, wobei das Federglied (43) aus einer Wendelfeder besteht, deren Achsel bevorzugt koaxial zur Achse (S) des Ventils angeordnet ist.

10. Ventil nach Anspruch 1, wobei der Schließkörper (31), der in der Kammer (29) angeordnet ist, bevorzugt im Wesentlichen "pilzförmig" ist, mit einem darin ausgebildeten Kopf (45) und einem Stiel (47).

11. Ventil nach Anspruch 10, wobei der Schließkörper (31) dem Ventilkörper (11) über eine Führung (49) zugeordnet ist.

12. Ventil nach Anspruch 11, wobei die Führung aus einem biegsamen Element besteht.

13. Ventil nach Anspruch 12, wobei der Schließkörper (31) so in der Kammer (29) angeordnet ist, dass sein Kopf (45) im Wesentlichen in dem oberen Abschnitt der Kammer (29) angeordnet ist und sein Stiel (47) sich axial entlang der Kammer (29) bis zu der Führung (49) erstreckt, und wobei die Führung aus einer im Wesentlichen flachen, flexiblen Membran besteht, die einen separaten unteren Raum (53) für die Kammer (29) definiert.

14. Ventil nach Anspruch 13, wobei eine umlaufende Schulter (55) in der Kammer (29) angeordnet ist, um bei geschlossenem Ventil einen Anschlag für den Kopf (45) des Schließkörpers (31) zu bilden.

15. Ventil nach Anspruch 14, wobei die Fläche der Unterseite (45a) des Kopfs (45) des Schließkörpers (31), welche der Membran (49) zugewandt ist, größer ist als die Fläche der entsprechenden Seite (49b) der Membran (49), welche dem Schließkörper (31) zugewandt ist.

16. Ventil nach Anspruch 14, wobei ein Leckagekanal (61) zwischen dem Kopf (45) des Schließkörpers (31) und der umlaufenden Anschlagschulter (55) angeordnet ist.

17. Ventil nach Anspruch 16, wobei der Leckagekanal (61) an der Unterseite (45a) des Kopfs (45) des Schließkörpers (31) ausgebildet ist.

18. Ventil nach Anspruch 14, wobei die Fläche der Oberseite (45b) des Kopfs (45) größer ist als die Fläche der Unterseite (45a) des Kopfs (45).

19. Ventil nach Anspruch 10, wobei vier Ablenkelemente (63) vorhanden sind, die bogenförmig sind und eine einwärts gerichtete Konkavität haben.

20. Ventil nach Anspruch 19, wobei die Ablenkelemente auf einem Kreis liegen der innen durch einen Umfang definiert ist, dessen Radius r etwa die Hälfte des Radius R des Kopfes (45) des Schließkörpers (31) ist, und außen näherungsweise durch den mit Radius R umlaufenden Rand des Kopfes definiert ist.

21. Ventil nach Anspruch 9, wobei die radialen Ablenkelemente (63) zudem bevorzugt so ausgebildet sind, dass sie intern einen kreisförmigen Sitz (65) bilden, der dafür geeignet ist, die Feder (43) aufzunehmen, wenn diese vorgesehen ist.

22. Ventil nach Anspruch 19, wobei vier Ablenkelemente (63) gleichmäßig verteilt sind und sich über einen Kreissektor von etwa 60° erstrecken, wobei ein entsprechender Kreissektor von etwa 30° zwischen einem Paar benachbarter Ablenkelemente frei gelassen ist.

23. Ventil nach Anspruch 20, wobei die Ablenkelemente (63) eine Krümmung haben, die von 1/r bis 1/R reicht, wobei r und R die kleinen und großen Radien sind, die jeweils den Kreis auf dem Kopf (45) des Schließkörpers (31) definieren, wo die Ablenkelemente (63) liegen.

24. Ventil nach Anspruch 20, wobei der Kopf (45) des Schließkörpers (31) bevorzugt einen zentralen Abschnitt (67) hat, der im Wesentlichen extern durch den Kreis definiert ist, auf dem die Ablenkelemente (63) liegen, und der einen entsprechenden kreisförmigen Vorsprung definiert, der axial von dem Kopf (45) ausgeht und eine im Wesentlichen konischen Querschnitt mit konkavem Profil aufweist.

25. Ventil nach Anspruch 3, wobei der untere Abschnitt (21) ein Paar von diamental gegenüber liegenden Schlitzen (23a, 23b) aufweist, die radial orientiert sind, um die Gefahr von Schmutzeintritt zu reduzieren.

## Revendications

1. Soupape automatique pour des installations de traite, comprenant un corps creux sensiblement cylindrique (11) définissant intérieurement une chambre (29) de passage de lait, ladite chambre comportant une conduite axiale d'entrée (15) et une conduite radiale de sortie (19) et étant pourvue d'un obturateur (31) qui peut être décalé axialement entre une configuration de fermeture, empêchant le passage de lait à travers la chambre (29), et une configuration d'ouverture, autorisant le passage de lait à travers la chambre (29), ledit obturateur (31) comportant une surface d'impact en forme (45b) conçue pour guider l'écoulement de lait frappant ledit obturateur lorsqu'il entre dans la soupape, **caractérisée en ce que** ladite surface d'impact (45b) est équipée de déflecteurs (63) faisant saillie axialement de la face supérieure de l'obturateur (31) et orientés radialement de façon à communiquer un mouvement de rotation au lait qui entre dans la soupape.

2. Soupape selon la revendication 1, dans laquelle ladite surface d'impact en forme (45b) comprend quatre déflecteurs (63).

3. Soupape selon la revendication 1, dans laquelle lesdits déflecteurs (63) sont organisés pour communiquer un mouvement de rotation au lait qui entre dans la soupape, jusqu'à générer un effet cyclonique sur l'écoulement de lait.

4. Soupape selon la revendication 1, ou 2, ou 3, dans laquelle ledit corps creux (11) comprend une partie supérieure (13), dans laquelle ladite conduite axiale d'entrée (15) de lait est définie, une partie intermédiaire (17), dans laquelle ladite conduite radiale de sortie (19) de lait est définie, et une partie inférieure (21) comportant au moins un orifice (23) en communication avec l'environnement extérieur, lesdites parties pouvant être séparées les unes des autres et assemblées les unes aux autres par le biais d'écrous de blocage taraudés ou de dispositifs d'accouplement à vis ou de moyens de liaison similaires.

5. Soupape selon la revendication 4, dans laquelle ladite partie supérieure (13) est liée à la partie intermédiaire (17) au moyen d'un écrou de blocage de liaison (33) coopérant, du premier côté, avec le bord inférieur (13a) de la partie supérieure (13) et vissé, de l'autre côté, autour du bord supérieur (17a) de la partie intermédiaire (17).

6. Soupape selon la revendication 5, dans laquelle un joint d'étanchéité (35) conçu pour éviter une fuite de lait dans la région de contact entre ladite partie supérieure (13) et ladite partie intermédiaire (17) est disposé entre ladite partie supérieure (13) et ladite partie intermédiaire (17).

7. Soupape selon la revendication 4, dans laquelle la partie inférieure (21) est liée à la partie intermédiaire (17) par l'intermédiaire d'un dispositif d'accouplement à vis direct (39).

8. Soupape selon la revendication 1, dans laquelle un élément élastique (43) conçu pour maintenir l'obturateur (31) fermé lorsque l'installation de traite est arrêtée, est interposé de préférence entre la partie supérieure (41) de ladite chambre (29) et l'obturateur (31).

9. Soupape selon la revendication 8, dans laquelle ledit élément élastique (43) est constitué d'un ressort hélicoïdal disposé de sorte que son axe est de préférence coaxial à l'axe (S) de la soupape.

10. Soupape selon la revendication 1, dans laquelle ledit obturateur (31) prévu à l'intérieur de la chambre (29) a, de préférence, une forme sensiblement de « champignon », une tête (45) et une tige (47) y étant définies.

11. Soupape selon la revendication 10, dans laquelle ledit obturateur (31) est associé au corps (11) de soupape au moyen d'un guide (49).

12. Soupape selon la revendication 11, dans laquelle ledit guide est constitué d'un élément souple.

13. Soupape selon la revendication 12, dans laquelle ledit obturateur (31) est reçu à l'intérieur de la chambre (24) de sorte que sa tête (45) se trouve sensiblement disposée dans la partie supérieure de ladite chambre (29) et que sa tige (47) s'étend axialement le long de la chambre (20) aussi loin que ledit guide (49), et dans laquelle ledit guide est constitué d'une membrane souple sensiblement plate définissant un espace inférieur distinct (53) pour la ladite chambre (29).

14. Soupape selon la revendication 13, dans laquelle un épaulement circonférentiel (55) est prévu dans ladite chambre (29) pour une mise en butée de ladite tête (45) dudit obturateur (31) lorsque la soupape est fermée.

15. Soupape selon la revendication 14, dans laquelle la surface de la face inférieure (45a) de la tête (45) de l'obturateur (31), faisant face à la membrane (49), est supérieure à la surface de la face correspondante (49b) de la membrane (40) faisant face à l'obturateur (31).

16. Soupape selon la revendication 14, dans laquelle un canal de fuite (61) est ménagé entre la tête (45) de l'obturateur (31) et l'épaulement circonférentiel de butée (55).

17. Soupape selon la revendication 16, dans laquelle ledit canal de fuite (61) est formé sur la face inférieure (45a) de la tête (45) de l'obturateur (31).

18. Soupape selon la revendication 14, dans laquelle la surface de la face supérieure (45b) de la tête (45) est supérieure à la surface de la face inférieure (45a) de ladite tête (45).

19. Soupape selon la revendication 10, dans laquelle quatre déflecteurs (63) sont prévus, lesquels ont une forme d'arc et présentent une concavité orientée vers l'intérieur.

20. Soupape selon la revendication 19, dans laquelle lesdits déflecteurs se trouvent à l'intérieur d'un anneau qui est défini intérieurement par une circonférence dont le rayon r est d'environ la moitié du rayon R de la tête (45) de l'obturateur (31), et qui est défini extérieurement sensiblement par le bord périphérique de tête de rayon R.

21. Soupape selon la revendication 9, dans laquelle lesdits déflecteurs (63) sont en outre conçus de préférence de sorte qu'ils définissent intérieurement un siège circulaire (65) approprié au logement dudit ressort (43), lorsqu'il est en place.

22. Soupape selon la revendication 19, dans laquelle lesdits quatre déflecteurs (63) sont répartis uniformément et s'étendent sur un secteur circulaire d'environ 60°, ce par quoi un secteur circulaire correspondant d'environ 30° est laissé libre entre une paire de déflecteurs adjacents.

23. Soupape selon la revendication 20, dans laquelle lesdits déflecteurs (63) ont une courbure allant de 1/r à 1/R, où r et R sont respectivement les rayons mineur et majeur qui définissent l'anneau de la tête (45) de l'obturateur (31) où se trouvent les déflecteurs (63).

24. Soupape selon la revendication 20, dans laquelle la tête (45) de l'obturateur (31) comporte, de préférence, une partie centrale (67), qui est sensiblement définie extérieurement par l'anneau où se trouvent les déflecteurs (63), et qui définit une saillie circulaire correspondante s'étendant axialement de la tête (45), et qui a une section transversale sensiblement conique à profil concave.

25. Soupape selon la revendication 3, dans laquelle ladite partie inférieure (21) comprend deux fentes diamétralement opposées (23a, 23b), orientées radialement, afin de réduire le risque de pénétration de saleté.
